# EUROPEAN PATENT SPECIFICATION

(11) **EP 4 147 842 B1**
(45) Date of publication and mention of the grant of the patent: **03.12.2025**
(21) Application number: 21874780.6
(22) Date of filing: 17.03.2021
(51) Int. Cl.: B29C 33/10, B29C 45/26, F16J 15/08, H01M 8/0286

(54) **GASKET MEMBER MANUFACTURING METHOD**
VERFAHREN ZUR HERSTELLUNG EINES DICHTUNGSELEMENTS
PROCÉDÉ DE FABRICATION D'ÉLÉMENT JOINT D'ÉTANCHÉITÉ

(30) Priority: 29.09.2020 JP 2020163727
(43) Date of publication of application: 15.03.2023
(73) Proprietor: Sumitomo Riko Company Limited, Komaki-shi, Aichi 485-8550 (JP)
(72) Inventor: KADONO, Hideya, Komaki-shi, Aichi 485-8550 (JP); HAGA, Shinichi, Komaki-shi, Aichi 485-8550 (JP)
(74) Representative: Becker, Eberhard
(86) International application number: PCT/JP2021/010895
(87) International publication number: WO 2022/070472

(56) References cited:
- CA-A1- 2 756 083
- JP-A- 2004 076 877
- JP-A- 2008 168 448
- JP-A- 2008 168 448
- JP-A- 2010 174 981
- JP-A- 2010 174 982

## Description

### Technical Field

The disclosure relates to a method for manufacturing a gasket member used in a fuel battery or the like, and to a gasket member.

### Related Art

Conventionally, electricity has been attracting attention as alternative energy to fossil fuels. For example, if electricity is used as energy for an automobile, in addition to storing electricity in a rechargeable battery for use, it has been proposed to generate electricity by a fuel battery for use. The fuel battery includes a fuel cell in which a generator having a pair of electrode layers provided on both sides of an electrolyte membrane is sandwiched between a pair of separators. By a stack structure in which a plurality of fuel cells are laminated, required electric power may be exerted.

In the fuel cell, an oxidizing gas and a fuel gas are supplied to the generator by an oxidizing gas flow path and a fuel gas flow path formed on a surface of the separator that is superimposed on the generator, and electric power is generated by an electrochemical reaction (water generation reaction) being the reverse reaction of electrolysis of water. Hence, the fuel cell is provided with a gasket member for preventing leakage of the oxidizing gas, the fuel gas, water or the like. The gasket member has a structure in which an annular gasket made of a rubber-like elastic material is integrally fixed to a surface of a base material, as in, for example, a seal part shown in Japanese Patent Application Laid-Open No. 2008-168448 (Patent Document 1).

As shown in FIG. 3 of Patent Document 1, in the seal part of Patent Document 1, an injection gate for injecting the rubber-like elastic material into a cavity and an air vent hole for discharging a gas from the cavity are connected to the cavity of a base being a portion of the gasket, and extend toward a protruding tip side of the gasket. The rubber-like elastic material may be directly injected into the cavity of the gasket from the injection gate, and the gas may be directly discharged from the cavity of the gasket into the air vent hole.

### Prior-Art Documents

### Patent Documents

Patent Document 1: Japanese Patent Application Laid-Open No. 2008-168448

CA 2756083 A1 relates to a method of manufacturing a seal component obtained by integrally molding a gasket made of a rubber material or a synthetic resin material having a rubber-like elasticity on a film, sheet or plate-like base frame. JP 2008-168448 A relates to a manufacturing method of a seal part formed by integrally molding a gasket comprising a rubbery elastic material along with a film like, sheetlike or plate-shaped base material.

### SUMMARY OF THE INVENTION

### Problems to Be Solved by the Invention

Upon study, the present inventors have found that, if the air vent hole is provided so as to extend from a molding cavity of the gasket toward the tip side, since the rubber-like elastic material that has entered the air vent hole is directly connected to the gasket and molded, and protrudes toward the tip side of the gasket, it is necessary to remove the portion from the gasket. However, in removal (demolding) of a molding die after completion of molding of the gasket, in a simple method such as pulling off and removing the portion from the gasket, there is a fear that sealing performance may be affected, such as that the gasket may be damaged.

A problem to be solved by the disclosure is to provide a novel gasket member manufacturing method in which a molding defect or damage during molding of a gasket can be prevented.

An object of the disclosure is to provide a gasket member having a novel structure in which a predetermined gasket exhibits stable sealing performance.

### Means for Solving the Problems

The invention is set out in the appended set of claims. The following disclosure serves a better understanding of the present invention. Described below are preferred aspects for understanding of the disclosure. However, each aspect described below is exemplary and may be adopted in combination with each other as appropriate. In addition, components described in each aspect may be recognized and adopted independently wherever possible, and may also be adopted in combination with any component described in another aspect as appropriate. Accordingly, in the disclosure, various different aspects may be realized and the disclosure is not limited to the aspects described below.

A first aspect provides a gasket member manufacturing method for manufacturing a gasket member. In the gasket member, a base material having a plate shape is clamped between a first split mold and a second split mold, and a gasket is fixed to a surface of the base material by injecting and filling a rubber-like elastic material into a cavity of the gasket defined between the base material and the first split mold. The gasket member manufacturing method includes the following. An air vent is provided including an exhaust groove and an exhaust hole, the exhaust groove being provided extending out from the cavity toward an inner peripheral side or an outer peripheral side on a butting surface between the base material and the first split mold and partially opening in a circumferential direction of the cavity, the exhaust hole extending out from the exhaust groove in a clamping direction of the first split mold and the second split mold. A gas in the cavity is discharged through the air vent at the time of injection and filling of the rubber-like elastic material into the cavity.

According to the gasket member manufacturing method in accordance with the present aspect, by discharging the gas (such as air or a volatile gas generated from the rubber-like elastic material) in the cavity through the air vent, the entire cavity can be filled with the rubber-like elastic material, and a molding defect due to residual gas in the cavity can be avoided.

Since the exhaust groove connected to the cavity of the gasket extends on the butting surface between the base material and the first split mold, the overflow tab molded by the exhaust groove is not located on a protruding tip side of the gasket molded by the cavity, and does not impair the sealing performance exhibited by abutment of the gasket. Hence, there is no need to remove the overflow tab from the gasket. Even if the overflow tab is removed, damage to the gasket or impact on properties of the gasket is reduced.

The exhaust hole extending in the clamping direction of the first split mold and the second split mold is connected to the exhaust groove in a position away from the cavity. Hence, even if an exhaust hole molded part molded by the exhaust hole is removed from the overflow tab molded by the exhaust groove, damage to the gasket or impact on properties of the gasket can be prevented.

According to a second aspect, in the gasket member manufacturing method described in the first aspect, a filling pressure of the rubber-like elastic material into the cavity is controlled by a first orifice composed of the exhaust groove and a second orifice provided at an end of the exhaust hole close to the exhaust groove.

According to the gasket member manufacturing method in accordance with the present aspect, by controlling the filling pressure of the rubber-like elastic material into the cavity by the first orifice and the second orifice, the rubber-like elastic material can be spread throughout the entire cavity and a molding defect of the gasket can be prevented.

Even if clamping by the first split mold and the second split mold causes the base material to be curved and deformed so as to be convex toward the cavity, by filling the rubber-like elastic material into the cavity at high pressure, deformation of the base material due to clamping can be eliminated.

According to a third aspect, in the gasket member manufacturing method described in the first or second aspect, a width dimension of an opening of the exhaust groove toward the cavity is greater than a hole diameter of the exhaust hole.

According to the gasket member manufacturing method in accordance with the present aspect, when the rubber-like elastic material is filled into the cavity, since the gas in the cavity is guided to the exhaust hole through the exhaust groove having a wide opening, efficient exhaust is realized. That is, the rubber-like elastic material is injected toward the exhaust groove from both sides in the circumferential direction so that the filling into an opening portion of the exhaust hole is lastly performed. However, a confluence position of the rubber-like elastic material injected toward the exhaust hole from both sides in the circumferential direction may vary in the circumferential direction of the cavity. Accordingly, the exhaust groove that is opened toward the cavity by the opening wider than the hole diameter of the exhaust hole is provided so as to communicate the cavity with the exhaust hole. Accordingly, the confluence position of the rubber-like elastic material is likely to fall within the range of the opening of the exhaust groove, and the gas in the cavity is efficiently discharged through the exhaust groove and the exhaust hole.

According to a fourth aspect, in the gasket member manufacturing method described in any one of the first to third aspects, an opening area of the exhaust hole toward the exhaust groove is smaller than an opening area of the exhaust groove toward the cavity.

According to the gasket member manufacturing method in accordance with the present aspect, for example, the filling pressure of the rubber-like elastic material into the cavity can be controlled in stages by the exhaust groove and the exhaust hole.

According to a fifth aspect, in the gasket member manufacturing method described in any one of the first to fourth aspects, a portion of the rubber-like elastic material molded by the exhaust hole is pulled off and removed from a portion of the rubber-like elastic material molded by the exhaust groove at the time of removal of the first split mold and the second split mold.

According to the gasket member manufacturing method in accordance with the present aspect, when the first split mold and the second split mold are removed after molding of the gasket, a portion (exhaust hole molded part) molded by the exhaust hole extending out in a protrusion direction of the gasket can be removed, and a step of cutting off the exhaust hole molded part or the like becomes unnecessary. Moreover, since the exhaust hole molded part is connected to a portion (overflow tab) molded by the exhaust groove, there is no risk of damage to the gasket when the exhaust hole molded part is pulled off. Even if the overflow tab is damaged by the pull-off, since the overflow tab is not a portion contributing to the properties of the gasket, target sealing performance is realized by the gasket.

According to a sixth aspect, in the gasket member manufacturing method described in any one of the first to fifth aspects, the rubber-like elastic material has a Mooney viscosity ML(1+3) at 100 °C of 10 to 80 when injected into the cavity.

According to the gasket member manufacturing method in accordance with the present aspect, since the rubber-like elastic material filled in the cavity has greater viscosity than silicone rubber or the like, the filling pressure into the cavity can be effectively controlled by the exhaust groove and the exhaust hole that are narrowed.

According to a seventh aspect, in the gasket member manufacturing method described in the sixth aspect, the rubber-like elastic material being a material for forming the gasket is at least one selected from a group consisting of ethylene-propylene rubber, ethylene-propylene-diene rubber, and ethylene-butene-diene rubber.

According to the gasket member manufacturing method in accordance with the present aspect, by adopting ethylene-butene-diene rubber or the like whose viscosity before molding is higher than silicone rubber or the like, the rubber-like elastic material is less likely to enter the narrowed air vent, and the rubber-like elastic material is preferentially filled into the cavity. Therefore, a molding defect of the gasket is avoided. The filling pressure of the rubber-like elastic material into the cavity can be effectively controlled by the exhaust groove and the exhaust hole that constitute the air vent.

According to an eighth aspect, in the gasket member manufacturing method described in any one of the first to seventh aspects, the base material is made of metal.

According to the gasket member manufacturing method in accordance with the present aspect, compared with a case of using an easily deformable base material such as a synthetic resin film, the base material can be obtained having increased deformation rigidity (flexural rigidity in a plate thickness direction) of the base material. Hence, when the base material is set between the first split mold and the second split mold, bending of the base material due to a mold clamping force can be prevented, and the gasket can be molded with accuracy.

When the base material is set between the first split mold and the second split mold, it becomes possible to tighten the base material with a relatively strong mold clamping force, and the occurrence of burrs due to the rubber-like elastic material entering between the base material and the first split mold can be suppressed.

According to a ninth aspect, in the gasket member manufacturing method described in any one of the first to eighth aspects, a plurality of each of the air vent and an injection gate for injecting the rubber-like elastic material into the cavity are provided, in which the air vent and the injection gate are alternately arranged in the circumferential direction of the cavity.

According to the gasket member manufacturing method in accordance with the present aspect, when the rubber-like elastic material injected from each injection gate into the cavity flows in the circumferential direction of the cavity, the air vent is arranged at a confluence portion of the rubber-like elastic material, and a gas is unlikely to remain in the cavity.

According to a tenth aspect, in the gasket member manufacturing method described in any one of the first to ninth aspects, the air vent is provided with a connection hole that connects the exhaust groove with the exhaust hole, in which the connection hole has greater connection area toward the exhaust groove than connection area toward the exhaust hole.

According to the gasket member manufacturing method in accordance with the present aspect, in a molded body of the rubber-like elastic material, a portion molded by the connection hole has a connection area toward the portion molded by the exhaust groove greater than a connection area toward the portion molded by the exhaust hole. Accordingly, when the portion molded by the exhaust hole is pulled off or the like and removed from the gasket side, the molded body of the rubber-like elastic material is easily cut at a connection portion (boundary portion) between the portion molded by the exhaust hole and the portion molded by the connection hole, and a cutting position of the molded body is set relatively far from the gasket. Hence, even if the molded body of the rubber-like elastic material that includes the gasket is cut in an unintended shape, it can be relatively effectively prevented that the impact of cutting extends to the gasket.

An eleventh aspect provides a gasket member including: a base material having a plate shape; and a gasket having an annular shape, formed of a rubber-like elastic material and integrally fixed to a surface of the base material. In the gasket member, an overflow tab extending out from the gasket toward an inner peripheral side or an outer peripheral side on a surface of the base material is integrally formed with the gasket and is partially provided in a circumferential direction of the gasket. The overflow tab further includes a removal trace of an exhaust hole for an air vent.

According to the gasket member in accordance with the present aspect, since a portion molded by the exhaust hole is cut off from the overflow tab integrally formed with the gasket, the cut-off of the portion molded by the exhaust hole is unlikely to affect the gasket.

According to a twelfth aspect, in the gasket member manufacturing method described in the eleventh aspect, the gasket extends in the circumferential direction in a mountain-like cross-sectional shape becoming narrower away from the base material.

According to the gasket member in accordance with the present aspect, when the gasket abuts against another member (sealing target member), since a tip portion of the abutting gasket is reduced in width, the abutment is performed at a large pressure, and excellent sealing performance is exhibited.

According to a thirteenth aspect, in the gasket member manufacturing method described in the eleventh or twelfth aspect, a recess is provided in a region of the base material where the gasket is fixed, and the overflow tab is fixed to a bottom inner surface of the recess and accommodated in the recess.

According to the gasket member in accordance with the present aspect, even if the overflow tab remains connected to the gasket without being removed, by accommodating the overflow tab in the recess, the overflow tab can be prevented from being sandwiched between the base material and another member (sealing target member) superimposed on the base material. Hence, it can be prevented that stress acts intensively on the base material due to sandwiching of the overflow tab. Uneven dimensions of the base material and the another member in a superimposition direction when the base material and the another member are superimposed are avoided.

### Effects of the Invention

According to the disclosure, a molding defect or damage during molding of a gasket can be prevented, and target sealing performance of the gasket can be stably achieved.

### BRIEF DESCRIPTION OF THE DRAWINGS

FIG. 1 is a plan view showing a gasket member as a first embodiment of the disclosure.
FIG. 2 is a cross-sectional view taken along II-II of FIG. 1.
FIG. 3 is a cross-sectional view taken along III-III of FIG. 2.
FIG. 4 is a cross-sectional view showing a mold clamping step in a manufacturing process of the gasket member of FIG. 1.
FIG. 5 is a cross-sectional view taken along V-V of FIG. 4.
FIG. 6 is a bottom view of a first split mold that molds a gasket of the gasket member shown in FIG. 1.
FIG. 7 is a cross-sectional view showing a gasket molding step in the manufacturing process of the gasket member of FIG. 1.
FIG. 8 is a cross-sectional view showing a demolding step in the manufacturing process of the gasket member of FIG. 1.
FIG. 9 is a cross-sectional view showing a gasket molding step in a manufacturing process of a gasket member as a second embodiment of the disclosure.
FIG. 10 is a cross-sectional view showing a gasket molding step in a manufacturing process of a gasket member as a third embodiment of the disclosure.
FIG. 11 is a cross-sectional view showing a gasket molding step in a manufacturing process of a gasket member as a fourth embodiment of the disclosure.

### DESCRIPTION OF THE EMBODIMENTS

Hereinafter, embodiments of the disclosure will be described with reference to the drawings.

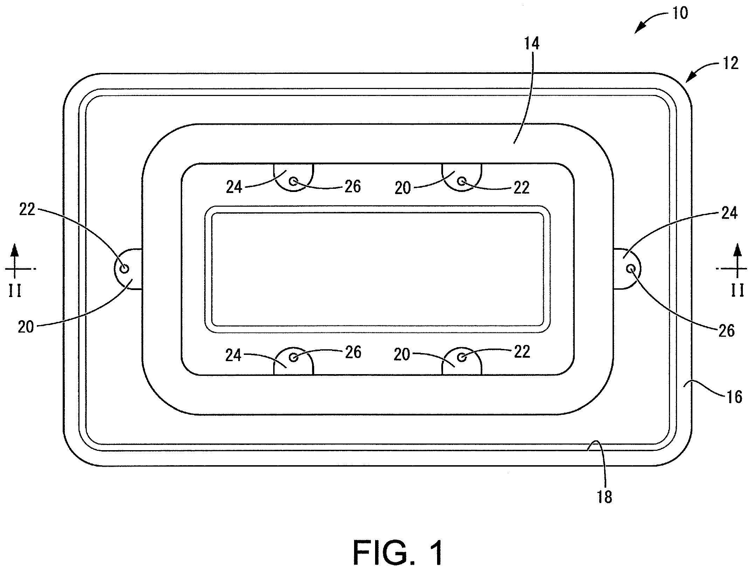

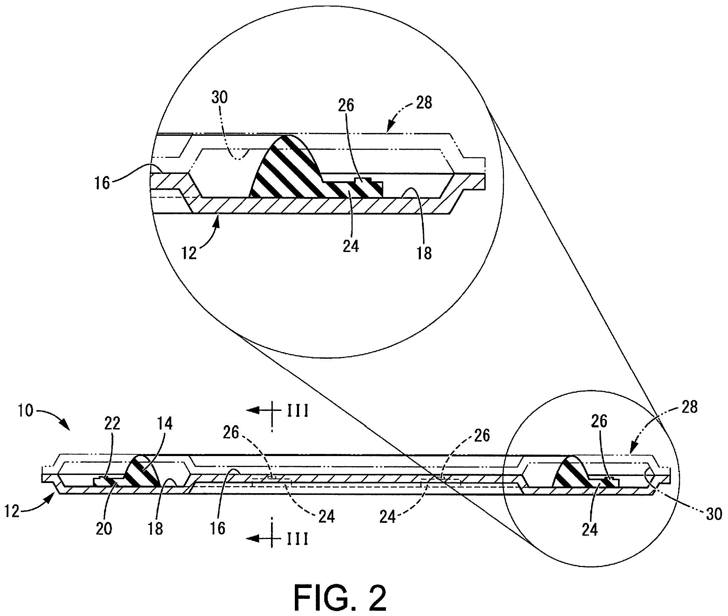

FIG. 1 to FIG. 3 show a gasket member 10 as a first embodiment. The gasket member 10 is used, for example, as a sealing structure for a fuel cell in a fuel battery stack, and includes a separator 12 as a base material and a gasket 14 integrally fixed to the separator 12. In the following description, an up-down direction generally refers to an up-down direction in FIG. 2 that is a thickness direction of the separator 12.

The separator 12 is a member having a plate shape. The separator 12 is preferably made of metal, and is formed of, for example, an aluminum alloy. The separator 12 has a substantially rectangular plate shape in the present embodiment. However, the outer shape thereof is not limited. A recess 18 opens on an upper surface 16 being a surface of the separator 12. The recess 18 is provided in a portion other than an outer peripheral end and a central portion of the separator 12, and has an annular shape continuous in a circumferential direction. It is desired that a depth dimension of the recess 18 be smaller than a protrusion height dimension of the gasket 14 and equal to or greater than a thickness dimension of an exhaust tab 24 to be described later. The separator 12 has substantially the same thickness in a portion where the recess 18 is formed and a portion outside the recess 18. However, for example, the portion where the recess 18 is formed may be thinner than other portions due to formation of the recess 18. A large number of grooves (not shown) through which an oxidizing gas, a fuel gas, water or the like flow are formed in the central portion of the separator 12, and have been omitted in the drawings for the sake of clarity. In the separator 12, a through hole for allowing the oxidizing gas, the fuel gas, water or the like to flow in the thickness direction may be formed.

The gasket 14 is formed of a rubber-like elastic material such as rubber or a resin elastomer. The material for forming the gasket 14 is not particularly limited if it is a rubber-like elastic material. For example, ethylene-propylene rubber, ethylene-propylene-diene rubber, and ethylene-butene-diene rubber may be adopted. The material for forming the gasket 14 preferably has Mooney viscosity ML(1+3) at 100 °C of 10 to 80 as a viscosity in a flow state before molding. It is desired that the material for forming the gasket 14 have higher viscosity and lower fluidity than silicone rubber in the flow state before molding.

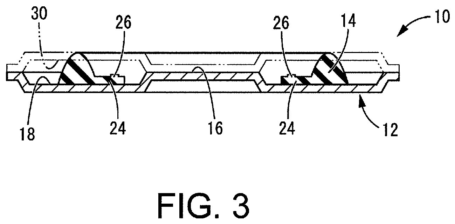

The gasket 14 has an annular shape, and is continuously provided over an entire outer peripheral portion of the separator 12. As shown in FIG. 2 and FIG. 3, the gasket 14 protrudes from the upper surface 16 of the separator 12 and has a mountain-like cross-sectional shape becoming narrower upward away from the separator 12. In other words, the gasket 14 has a cross-sectional shape substantially of an isosceles triangle in a cross section orthogonal to the circumferential direction shown in FIG. 2 and FIG. 3. An upper end surface being a surface of an upper apex of the gasket 14 is a curved surface having a substantially arc shape in the cross section orthogonal to the circumferential direction.

An injection tab 20 is integrally formed on the gasket 14. The injection tab 20 is partially provided in the circumferential direction of the gasket 14 having an annular shape, and extends out from a lower end of the gasket 14 toward an inner peripheral side or an outer peripheral side. The injection tab 20 of the present embodiment has a substantially circular shape or a substantially small hook shape as viewed in the up-down direction. However, the shape of the injection tab 20 as viewed in the up-down direction is not particularly limited. The injection tab 20 is preferably provided in a plurality of places on the gasket 14 in the circumferential direction, and is provided in three places in the present embodiment. The injection tab 20 has a substantially plate shape, and has a smaller thickness dimension in the up-down direction than the gasket 14. The thickness dimension of the injection tab 20 is preferably equal to or smaller than half a height dimension of the gasket 14, and more preferably equal to or less than 1/3 thereof.

An injection hole removal trace 22 is provided in the injection tab 20. The injection hole removal trace 22 is a trace obtained by pulling off an injection hole molded part 64 molded in an injection hole 44 formed in a first split mold 32 from the injection tab 20 in later-described molding of the gasket 14. Accordingly, the injection hole removal trace 22 provided in a plurality of injection tabs 20 is not limited to a certain appearance. For example, the injection hole removal trace 22 is specified by a convex part protruding from an upper surface of the injection tab 20, a concave part opening on the upper surface of the injection tab 20, or a different texture from that of other portions on the upper surface of the injection tab 20. Since the injection hole 44 to be described later has a circular cross section, the injection hole removal trace 22 has a substantially circular shape in top view.

The exhaust tab 24 as an overflow tab is integrally formed on the gasket 14. The exhaust tab 24 is partially provided in the circumferential direction of the gasket 14 having an annular shape, and extends out from the lower end of the gasket 14 toward the inner peripheral side or the outer peripheral side. The exhaust tab 24 of the present embodiment has a substantially circular shape or a substantially small hook shape as viewed in the up-down direction. However, the shape of the exhaust tab 24 as viewed in the up-down direction is not particularly limited. The exhaust tab 24 is preferably provided in a plurality of places on the gasket 14 in the circumferential direction. The exhaust tab 24 has a substantially plate shape, and has a smaller thickness dimension in the up-down direction than the gasket 14. The thickness dimension of the exhaust tab 24 is preferably equal to or smaller than half the height dimension of the gasket 14, and more preferably equal to or less than 1/3 thereof.

An exhaust hole removal trace 26 being a trace of removal of an exhaust hole 56 to be described later is provided in the exhaust tab 24. The exhaust hole removal trace 26 is a trace obtained by pulling off and removing an exhaust hole molded part 66 molded in the exhaust hole 56 formed in the first split mold 32 from the exhaust tab 24 in the later-described molding of the gasket 14. Accordingly, the exhaust hole removal trace 26 provided in a plurality of exhaust tabs 24 is not limited to a certain appearance. For example, the exhaust hole removal trace 26 is specified by a convex part protruding from an upper surface of the exhaust tab 24, a concave part opening on the upper surface of the exhaust tab 24, or a different texture from that of other portions on the upper surface of the exhaust tab 24. The exhaust hole removal trace 26 has a substantially circular shape in top view from the fact that the exhaust hole 56 to be described later has a circular cross section. The exhaust hole removal trace 26 is provided in a position in the exhaust tab 24 away from the gasket 14.

The injection tab 20 and the exhaust tab 24 are alternately arranged in the circumferential direction of the gasket 14. Accordingly, the injection hole removal trace 22 provided in the injection tab 20 and the exhaust hole removal trace 26 provided in the exhaust tab 24 are alternately arranged in the circumferential direction of the gasket 14. The exhaust tab 24 is preferably arranged substantially in the center between the injection tabs 20 and 20 on both sides adjacent to each other in the circumferential direction so that distances from these injection tabs 20 and 20 to the exhaust tab 24 are substantially equal.

The gasket 14, the injection tab 20, and the exhaust tab 24 are all fixed to a bottom inner surface of the recess 18 of the separator 12. Since the depth dimension of the recess 18 is smaller than the protrusion height dimension of the gasket 14, the gasket 14 protrudes upward from an opening of the separator 12 at a protruding tip portion. Since the depth dimension of the recess 18 is equal to or greater than the thickness dimension of the injection tab 20 and the exhaust tab 24, the injection tab 20 and the exhaust tab 24 are accommodated in the recess 18 without protruding upward from the opening of the recess 18. Preferably, the injection hole removal trace 22 provided in the injection tab 20 and the exhaust hole removal trace 26 provided in the exhaust tab 24 are also accommodated in the recess 18.

The recess 18 may have a constant width dimension over the entire circumference, and may have a size allowing for accommodation of the injection tab 20 and the exhaust tab 24 protruding from the gasket 14 toward the inner peripheral side or the outer peripheral side. By partially increasing the width dimension of the recess 18 at a portion where the injection tab 20 and the exhaust tab 24 are formed, the recess 18 may be able to accommodate the injection tab 20 and the exhaust tab 24.

The gasket member 10 having such a structure is superimposed on a sealing target member 28 virtually indicated by a two-dot chain line in FIG. 2 and FIG. 3 for use. The sealing target member 28 is another separator in the present embodiment, and has a shape substantially plane-symmetrical with respect to the separator 12. However, the sealing target member is not limited to a separator, and may be, for example, a membrane electrode assembly (MEA) in which an electrode layer is provided on both sides of an electrolyte membrane.

The sealing target member 28 is superimposed from the protruding tip side of the gasket 14 onto the separator 12 as the base material. Since the sealing target member 28 is substantially plane-symmetrical with respect to the separator 12, a recess 30 opening toward the separator 12 is formed in the portion where the injection tab 20 and the exhaust tab 24 are provided. Hence, even if the injection tab 20, the exhaust tab 24, the injection hole removal trace 22 and the exhaust hole removal trace 26 protrude upward from the opening of the recess 18 of the separator 12, the injection tab 20, the exhaust tab 24, the injection hole removal trace 22 and the exhaust hole removal trace 26 may be accommodated in the recess 30 of the sealing target member 28 and are not sandwiched between the separator 12 and the sealing target member 28. Accordingly, the occurrence of stress concentration on the separator 12 and the sealing target member 28 due to sandwiching of the injection tab 20 or the exhaust tab 24 is avoided. The occurrence of uneven dimensions of the separator 12 and the sealing target member 28 in a lamination direction due to sandwiching of the injection tab 20 and the exhaust tab 24 can be prevented.

In the state in which the sealing target member 28 is superimposed on the separator 12, the gasket 14 is pressed against a bottom inner surface of the recess 30 of the sealing target member 28. A space between the superimposed surfaces of the separator 12 and the sealing target member 28 is fluid-tightly sealed by the gasket 14. Accordingly, in the space between the superimposed surfaces of the separator 12 and the sealing target member 28, the inner peripheral side from the gasket 14 is fluid-tightly separated from the outer peripheral side. Since the gasket 14 has a mountain-like cross section that becomes narrower toward a tip, a large contact pressure of the gasket 14 on the sealing target member 28 can be achieved, and the sealing performance may be improved by the contact of the gasket 14 with the sealing target member 28.

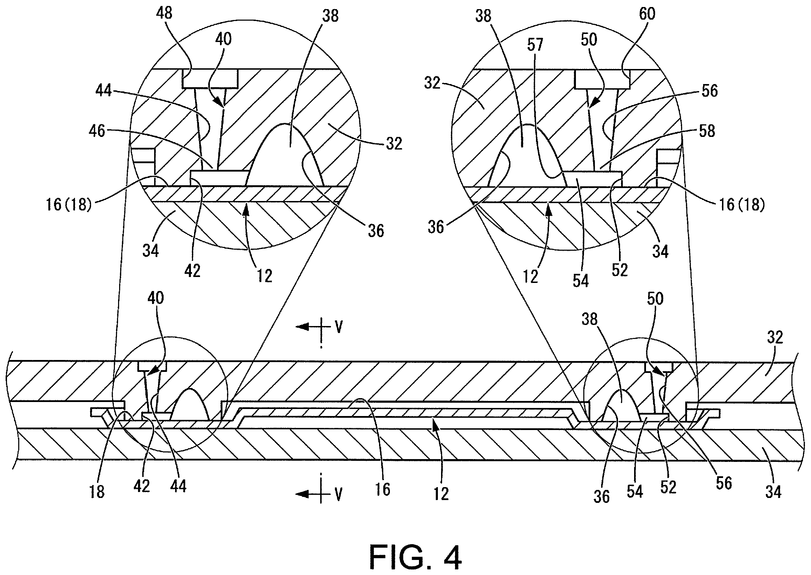

The gasket member 10 of the present embodiment is formed by molding the gasket 14 on the upper surface 16 of the separator 12 and fixing the gasket 14 to the separator 12 at the time of molding. In the following, a process for molding the gasket 14 on the separator 12 and obtaining the gasket member 10 is described with reference to FIG. 4 to FIG. 8.

First, the first split mold 32 and a second split mold 34 are prepared which are molding dies for the gasket 14. As shown in FIG. 4 to FIG. 6, a peripheral groove 36 having a shape corresponding to the gasket 14 is provided to open on a lower surface of the first split mold 32. The second split mold 34 includes an upper surface able to support a lower surface of the separator 12.

The separator 12 constituting the gasket member 10 is prepared in advance. The separator 12 can be obtained, for example, by appropriately forming a groove or the like on a metal raw plate by stamping.

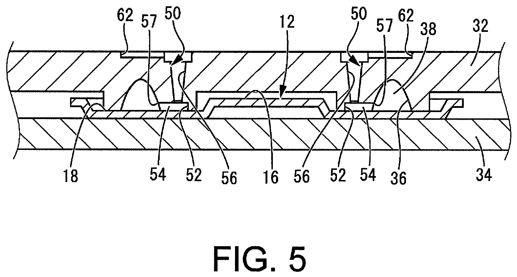

Next, the separator 12 is set between the first split mold 32 and the second split mold 34. That is, as shown in FIG. 4 and FIG. 5, in a state in which the separator 12 is placed on the upper surface of the second split mold 34, the first split mold 32 is superimposed on the separator 12 and the second split mold 34 from above, and the first split mold 32 and the second split mold 34 are clamped. By clamping of the first split mold 32 and the second split mold 34, the separator 12 is sandwiched between the first split mold 32 and the second split mold 34. Particularly, an inner peripheral side and an outer peripheral side of the peripheral groove 36 on the lower surface of the first split mold 32 are pressed against and come into close contact with the upper surface 16 of the separator 12. Although omitted from illustration, clamping of the first split mold 32 and the second split mold 34 may be realized by a conventional mold clamping mechanism such as of a straight hydraulic type or a toggle type.

By causing the lower surface of the first split mold 32 and the upper surface 16 of the separator 12 to butt against each other, an opening of the peripheral groove 36 that opens on the lower surface of the first split mold 32 is covered by the separator 12. Accordingly, a cavity 38 having an annular shape is formed between the first split mold 32 and the separator 12. The cavity 38 is a portion where the gasket 14 is molded, and has an inner surface shape corresponding to the gasket 14.

An injection gate 40 for injecting a rubber-like elastic material is connected to the cavity 38. A plurality of injection gates 40 are formed in the first split mold 32, and the injection gate 40 includes an injection groove 42 extending out from the peripheral groove 36 constituting the cavity 38 toward an inner peripheral side or an outer peripheral side, and an injection hole 44 extending out upward from the injection groove 42.

The injection groove 42 is in the shape of a groove opening on the lower surface of the first split mold 32, and extends on a butting surface of the first split mold 32 against the separator 12. The injection groove 42 is a portion where the injection tab 20 is molded and has an inner surface shape corresponding to an outer surface of the injection tab 20. Like the peripheral groove 36, an opening of the injection groove 42 is covered by the separator 12 in the state in which the first split mold 32 and the second split mold 34 are clamped.

The injection hole 44 is a hole extending in the up-down direction, has a lower end opening to the injection groove 42, and has an upper end reaching an upper end of the first split mold 32. The injection hole 44 as a whole has a tapered hole shape whose diameter gradually decreases downward, in which the lower end is taken as an injection orifice 46 having a small diameter, and the upper end portion is taken as an expanded diameter part 48 partially having a large diameter.

An air vent 50 for discharging a gas such as air or a volatile gas of the rubber-like elastic material is connected to the cavity 38. A plurality of air vents 50 are formed in the first split mold 32, and the air vent 50 includes an exhaust groove 52 extending out from the peripheral groove 36 constituting the cavity 38 toward the inner peripheral side or the outer peripheral side, and an exhaust hole 56 extending out upward from the exhaust groove 52.

The exhaust groove 52 is in the shape of a groove opening on the lower surface of the first split mold 32, and extends on the butting surface of the first split mold 32 against the separator 12. The exhaust groove 52 is partially provided in the circumferential direction with respect to the peripheral groove 36. In the present embodiment, a plurality of exhaust grooves 52 are provided so as to be separated from each other in the circumferential direction of the peripheral groove 36. The exhaust groove 52 is a portion where the exhaust tab 24 is molded and has an inner surface shape corresponding to an outer surface of the exhaust tab 24. Like the peripheral groove 36, an opening of the exhaust groove 52 is covered by the separator 12 in the state in which the first split mold 32 and the second split mold 34 are clamped. The exhaust groove 52 is communicated with the cavity 38, and the entire exhaust groove 52 including an opening portion toward the cavity 38 is taken as a first orifice 54.

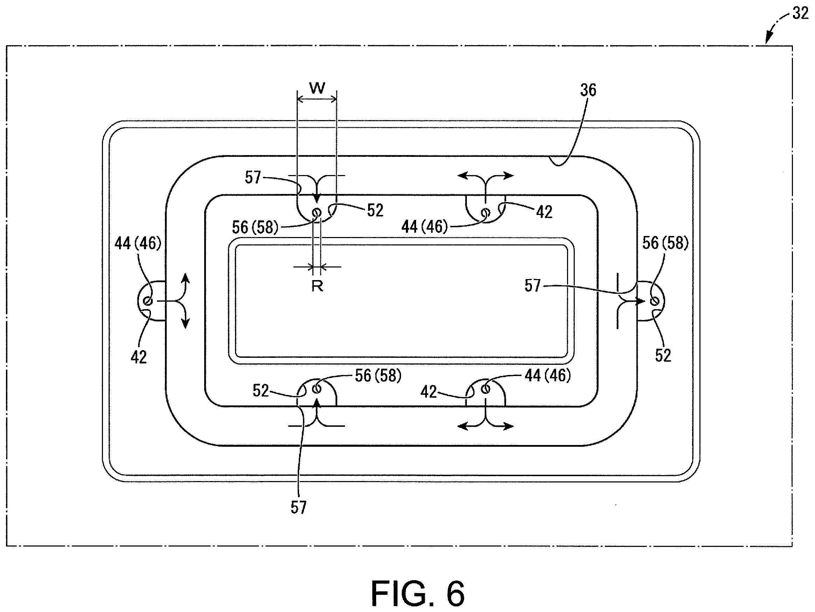

The exhaust hole 56 is a hole extending in the up-down direction, has a lower end opening to the exhaust groove 52, and has an upper end reaching the upper end of the first split mold 32. The exhaust hole 44 as a whole has a tapered hole shape whose diameter gradually decreases downward, in which the lower end is taken as a second orifice 58 having a small diameter. The upper end portion of the exhaust hole 56 is taken as an expanded diameter part 60 partially having a large diameter. A width dimension W (see FIG. 6) of an opening 57 of the exhaust groove 52 is greater than a hole diameter R (see FIG. 6) of the exhaust hole 56 at the second orifice 58 (W>R).

It is desired that the plurality of injection gates 40 and the plurality of air vents 50 be arranged so as to be alternately located in the circumferential direction of the cavity 38. More preferably, distances between the air vent 50 and each of the injection gates 40 and 40 located on both sides of the air vent 50 in the circumferential direction are substantially the same as each other.

As shown in FIG. 5, at least one exhaust hole 56 has at the upper end thereof a suction groove 62 extending out toward the inner peripheral side or the outer peripheral side connected thereto. The suction groove 62 is connected to a vacuum pump (not shown). After the cavity 38 is formed by clamping of the first split mold 32 and the second split mold 34, by sucking and forcibly discharging the air in the cavity 38 with the vacuum pump, the pressure inside the cavity 38 is reduced to be lower than the atmospheric pressure.

An injection molding machine (not shown) that injects the rubber-like elastic material being the material for forming the gasket 14 into the injection gate 40 is arranged above the first split mold 32, and an injection port of the injection molding machine is connected to the injection hole 44 of the injection gate 40. The rubber-like elastic material is injected into the cavity 38 that has been depressurized in advance from the injection port of the injection molding machine through the injection gate 40. The rubber-like elastic material is in a state of having fluidity, and is injected into the cavity 38 in a pressurized state. In FIG. 6, a flow of the rubber-like elastic material injected from the injection gate 40 into the cavity 38 is indicated by an arrow.

Since the cavity 38 is in the depressurized state in which the air has been forcibly discharged, the rubber-like elastic material positively flows into the cavity 38. Particularly, since the rubber-like elastic material is injected into the cavity 38 in the pressurized state, a pressure difference from the air pressure inside the cavity 38 is increased, and the rubber-like elastic material easily flows in the cavity 38.

The rubber-like elastic material injected from the injection hole 44 into the cavity 38 through the injection groove 42 flows in the cavity 38 from the injection groove 42 toward both sides in the circumferential direction, as indicated by the arrows in FIG. 6. By injection of the rubber-like elastic material, the gas in the cavity 38 is discharged through the exhaust groove 52 and to the outside from the exhaust hole 56. In short, the injection of the rubber-like elastic material from the injection gate 40 into the cavity 38 is performed while the gas in the cavity 38 is discharged to the outside through the air vent 50.

The rubber-like elastic material that has flowed into the cavity 38 from two injection grooves 42 and 42 adjacent to each other in the circumferential direction of the cavity 38 joins between the injection grooves 42 and 42 in the cavity 38. Since the exhaust groove 52 is arranged so as to open to the cavity 38 at a confluence position of the rubber-like elastic material, the exhaust groove 52 is not blocked until the inside of the cavity 38 is filled with the rubber-like elastic material, and the discharge of gas through the exhaust groove 52 and the exhaust hole 56 is maintained. Hence, residual gas in the cavity 38 is prevented, and a molding defect of the gasket 14 molded by the cavity 38 is prevented.

Particularly, in the present embodiment, since the width dimension of the exhaust groove 52 is greater than that of the exhaust hole 56 in the circumferential direction of the cavity 38, the confluence position of the rubber-like elastic material is more likely to be located in an opening portion of the air vent 50 than in the case where the exhaust hole 56 directly opens to the cavity 38. Hence, even if the confluence position of the rubber-like elastic material varies in the circumferential direction of the cavity 38, the gas in the cavity 38 can be efficiently discharged by the air vent 50.

The rubber-like elastic material flowing into the cavity 38 also infiltrates into the exhaust groove 52. However, the opening area of the opening 57 of the exhaust groove 52 toward the cavity 38 is sufficiently smaller than the area (cavity cross-sectional area) of a cross section of the cavity 38 orthogonal to the circumferential direction, and the rubber-like elastic material is more likely to flow through the cavity 38 in the circumferential direction than to infiltrate into the exhaust groove 52. Hence, a filling pressure of the rubber-like elastic material to be filled in the cavity 38 is set by the first orifice 54 composed of the exhaust groove 52. Accordingly, the filling pressure of the rubber-like elastic material into the cavity 38 can be controlled by a height and a circumferential width of the exhaust groove 52.

The rubber-like elastic material that has entered the exhaust groove 52 attempts to infiltrate into the exhaust hole 56 from the exhaust groove 52. The opening area of the exhaust hole 56 toward the exhaust groove 52 (the opening area of the second orifice 58) is further made smaller than the opening area of the exhaust groove 52 toward the cavity 38, and inflow resistance of the rubber-like elastic material from the exhaust groove 52 to the exhaust hole 56 is further increased. Accordingly, the rubber-like elastic material preferentially infiltrates into the exhaust hole 56 from the exhaust groove 52, the rubber-like elastic material can be injected into the cavity 38 at a relatively large pressure, and the entire cavity 38 can be filled with the rubber-like elastic material. In short, the filling pressure of the rubber-like elastic material into the cavity 38 can also be controlled by the second orifice 58 of the exhaust hole 56.

In the present embodiment, by controlling the filling pressure by the first orifice 54 composed of the exhaust groove 52 and by controlling the filling pressure by the second orifice 58 of the exhaust hole 56, the filling pressure of the rubber-like elastic material into the cavity 38 can be increased gradually or in stages to a target predetermined pressure in the end, and the entire cavity 38 can be filled with the rubber-like elastic material injected at an appropriate pressure.

A plurality of exhaust grooves 52 may have constant opening area or mutually different opening areas toward the cavity 38. For example, the opening area may vary depending on an assumed pressure of the rubber-like elastic material in an opening portion of each exhaust groove 52. Specifically, for example, the opening area may be reduced in the exhaust groove 52 where the filling pressure is likely to increase by reason of being close to the injection gate 40 or the like, the opening area may be increased in the exhaust groove 52 where the filling pressure is likely to decrease by reason of being far from the injection gate 40 or the like, and filling of the rubber-like elastic material may be completed substantially equally over an entire region between injection gates of the cavity 38.

Similarly, a plurality of exhaust holes 56 may have constant opening area or mutually different opening areas toward the exhaust groove 52. For example, the opening area may vary depending on an assumed pressure of the rubber-like elastic material at an opening of the exhaust hole 56. Specifically, for example, the opening area may be reduced in the exhaust hole 56 where the filling pressure is likely to increase by reason of being close to the injection gate 40 or the like, and the opening area may be increased in the exhaust hole 56 where the filling pressure is likely to decrease by reason of being far from the injection gate 40 or the like.

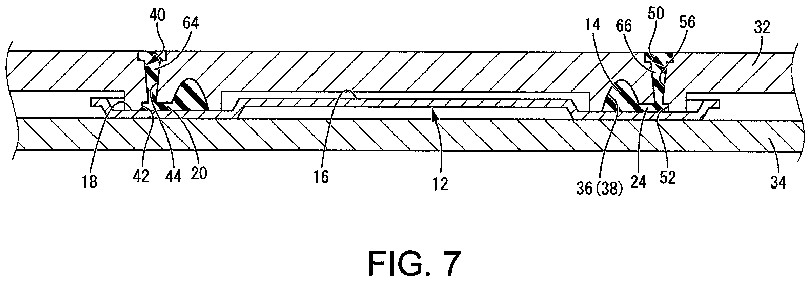

As shown in FIG. 7, the rubber-like elastic material is vulcanized and molded in a state of filling up the cavity 38, the injection gate 40 and the air vent 50. Accordingly, the gasket 14 is molded in the cavity 38. The injection tab 20 is molded in the injection groove 42, and the injection hole molded part 64 is molded in the injection hole 44. The exhaust tab 24 is molded in the exhaust groove 52, and the exhaust hole molded part 66 is molded in the exhaust hole 56. The gasket 14, the injection tab 20, the injection hole molded part 64, the exhaust tab 24 and the exhaust hole molded part 66 are integrally formed and continuous.

When the rubber-like elastic material fills the entirety of the cavity 38, the injection gate 40 and the air vent 50, while the internal pressure of the cavity 38 increases, the base material is the separator 12 made of metal, and the first split mold 32 and the second split mold 34 are clamped with a large clamping force. Hence, the rubber-like elastic material is prevented from protruding from between abutting surfaces of the separator 12 and the first split mold 32, and the occurrence of burrs is prevented.

It is also conceivable that, by mold clamping with a large clamping force, the separator 12 elastically bends and protrudes toward the cavity 38 side. However, since the rubber-like elastic material is considered to be a rubber material having relatively high viscosity, by filling the cavity 38 with the rubber-like elastic material at high pressure, bending of the separator 12 can be eliminated and the separator 12 can be restored to its initial shape.

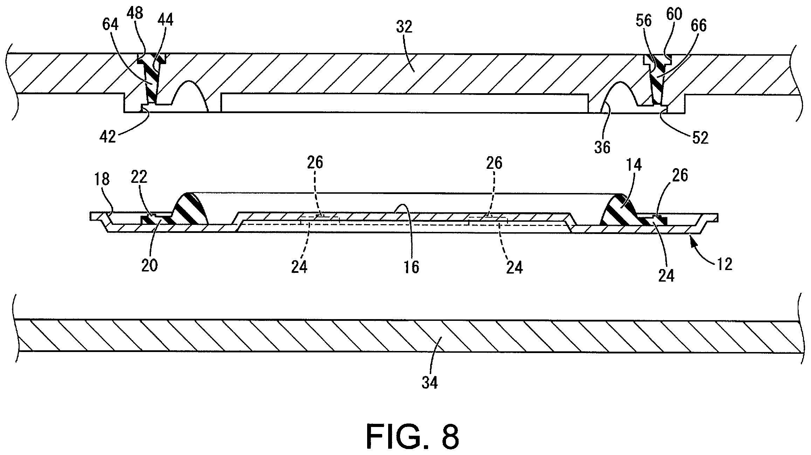

After molding of the gasket 14 is completed, as shown in FIG. 8, the first split mold 32 and the second split mold 34 are separated in the up-down direction and removed. In the injection hole molded part 64, an upper end portion of a large diameter molded by the expanded diameter part 48 of the injection hole 44 forms an undercut in the up-down direction with respect to the first split mold 32. Similarly, in the exhaust hole molded part 66, an upper end portion of a large diameter molded by the expanded diameter part 60 of the exhaust hole 56 forms an undercut in the up-down direction with respect to the first split mold 32. Accordingly, when the first split mold 32 is removed upward from the separator 12, as the injection hole molded part 64 is pulled off from the injection tab 20, the exhaust hole molded part 66 is pulled off from the exhaust tab 24, and the injection hole molded part 64 and the exhaust hole molded part 66 are separated and removed from the gasket 14. In the present embodiment, since the lower end of the injection hole 44 is taken as the injection orifice 46 of a small diameter, the injection hole molded part 64 is separated from the injection tab 20 at the lower end. Since the lower end of the exhaust hole 56 is taken as the second orifice 58 of a small diameter, the exhaust hole molded part 66 is separated from the exhaust tab 24 at the lower end. Accordingly, the injection hole removal trace 22 being a trace of breakage of the injection hole molded part 64 is formed on the upper surface of the injection tab 20, and the exhaust hole removal trace 26 being a trace of breakage of the exhaust hole molded part 66 is formed on the upper surface of the exhaust tab 24.

In this way, in the present embodiment, the injection hole molded part 64 and the exhaust hole molded part 66 that may interfere with a sealing structure composed of the gasket 14 may be removed at the time of removal of the first split mold 32 and the second split mold 34, and a step of removing the injection hole molded part 64 and the exhaust hole molded part 66 is considered unnecessary. Accordingly, by removal of the first split mold 32 and the second split mold 34, the gasket member 10 can be obtained and the manufacturing process can be completed. However, by adding, for example, a step of removing a trace of breakage by cutting, the traces of breakage of the injection hole molded part 64 and the exhaust hole molded part 66 can be reduced in size. Even if the exhaust hole molded part 66 is not cut off only at a boundary portion with the exhaust tab 24 and the cut surface extends to a position relatively close to the gasket 14, the cut surface can be easily stopped by the exhaust tab 24 and prevented from reaching the gasket 14. The exhaust tab 24 is merely molded by flowing the rubber-like elastic body into the exhaust groove 52 at the time of molding, and does not affect the sealing performance of the gasket 14 even if it is cut.

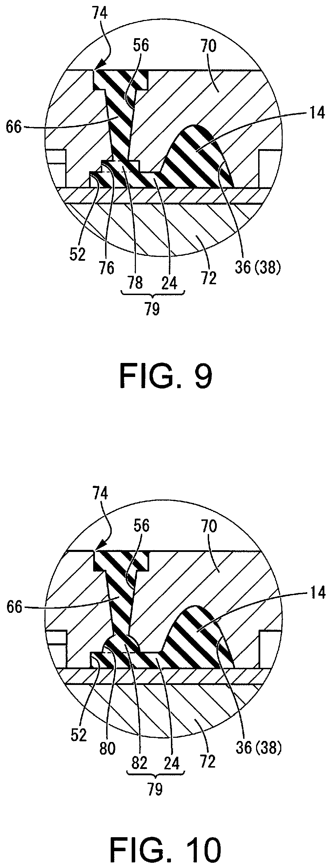

FIG. 9 shows a manufacturing process of a gasket member as a second embodiment of the disclosure. Specifically, FIG. 9 shows a state in which the cavity 38 and an air vent 74 formed by a first split mold 70 and a second split mold 72 are filled with the rubber-like elastic material. In the present embodiment, the members and portions substantially the same as those in the first embodiment are designated by the same reference numerals in the drawings, and the description thereof will be omitted.

The first split mold 70 includes a connection hole 76 that opens downward on a bottom surface of the exhaust groove 52. The connection hole 76 is partially provided on the bottom surface of the exhaust groove 5. In the present embodiment, the connection hole 76 extends linearly in the up-down direction with a substantially constant circular cross section. The connection hole 76 is continuous with the exhaust groove 52 at a lower end, is continuous with the exhaust hole 56 at an upper end, and is provided between the exhaust groove 52 and the exhaust hole 56 and connects the exhaust groove 52 with the exhaust hole 56. The connection hole 76 has a larger diameter than the lower end of the exhaust hole 56, and the exhaust hole 56 is connected to a central portion of the connection hole 76. Accordingly, the connection hole 76 has a connection area toward the exhaust groove 52 greater than a connection area toward the exhaust hole 56. In other words, the opening area of the connection hole 76 at the upper end (bottom surface) of the exhaust groove 52 is greater than the opening area of the exhaust hole 56 at the upper end of the connection hole 76. The air vent 74 of the present embodiment includes the connection hole 76 in addition to the exhaust groove 52 and the exhaust hole 56.

When the first split mold 70 and the second split mold 72 are separated from each other in the up-down direction and removed from a molded product after molding of the rubber-like elastic material, the exhaust hole molded part 66 molded by the exhaust hole 56 is pull off from the exhaust tab 24 molded by the exhaust groove 52. Since a connection portion between the exhaust hole molded part 66 and a connection hole molded part 78 molded by the connection hole 76 has smaller cross-sectional area (connection area) orthogonal to the up-down direction than a connection portion between the exhaust tab 24 and the connection hole molded part 78, the connection portion between the exhaust hole molded part 66 and the connection hole molded part 78 is preferentially cut at the time of removal of the first split mold 70 and the second split mold 72. Accordingly, the cutting position when the exhaust hole molded part 66 is cut is set in a position farther from the gasket 14 than that in the structure of the first embodiment in which the exhaust groove 52 and the exhaust hole 56 are directly continuously provided. Hence, removal of the exhaust hole molded part 66 is less likely to affect the shape or performance of the gasket 14, and target sealing performance can be stably achieved. Even if the exhaust hole molded part 66 is cut off not only at a boundary portion with the connection hole molded part 78 and the cut surface extends to a position relatively close to the gasket 14, the cut surface may be stopped by the connection hole molded part 78 or may be easily stopped at the exhaust tab 24, and damage to the gasket 14 is avoided.

In the present embodiment, an overflow tab 79 extending out from the gasket 14 toward the inner peripheral side or the outer peripheral side is composed of not only the exhaust tab 24 but is composed of the exhaust tab 24 and the connection hole molded part 78. When the exhaust hole molded part 66 is cut off and removed at the boundary portion with the connection hole molded part 78, a removal trace of the exhaust hole molded part 66 is formed on a surface of the connection hole molded part 78 that is a surface of the overflow tab 79.

The shape of the connection hole is not limited to that extending linearly in the up-down direction with a substantially constant circular cross section as in the aforementioned embodiments. For example, the connection hole may have a shape extending linearly in the up-down direction with a substantially constant polygonal cross section, or may have a tapered shape gradually shrinking upward, like a connection hole 80 of a third embodiment shown in FIG. 10. Specifically, the connection hole 80 shown in FIG. 10 has a substantially hemispherical recess shape, and a connection hole molded part 82 molded by the connection hole 80 has a substantially hemispherical shape whose diameter gradually decreases upward. In such an aspect shown in FIG. 10, the connection hole 80 has a connection area toward the exhaust groove 52 greater than a connection area toward the exhaust hole 56. At the time of removal of the exhaust hole molded part 66, a cutting position is set at a connection portion between the connection hole molded part 82 and the exhaust hole molded part 66. Accordingly, even in the aspect of FIG. 10, the same effect as that of the second embodiment is achieved.

A structure similar to the connection holes 76 and 80 shown in the second and third embodiments can also be provided between the injection groove 42 and the injection hole 44. According to this, damage to the gasket 14 at the time of cutting off the injection hole molded part 64 can be avoided, and target sealing performance can be stably achieved.

Although the embodiments of the disclosure have been described in detail above, the disclosure is not limited by the specific description thereof. For example, the specific shape of the gasket 14 should not be construed as being limited by the aforementioned embodiments. For example, the gasket 14 of the aforementioned embodiments has a simple and substantially square frame shape for easy understanding. However, the disclosure may also be applied in the gasket 14 having a relatively complex shape. Specifically, if a through hole for allowing a gas or liquid to flow in a thickness direction of the gasket member 10 is provided the separator 12, a portion surrounding each through hole may be provided in the gasket 14.

Further, the cross-sectional shape of the gasket 14 is not limited to the triangular shape shown in the aforementioned embodiments, and may be a trapezoidal shape, a semicircular shape or the like. The cross-sectional shape of the gasket 14 is not necessarily constant and may vary in a length direction. It is desired that the protruding tip side in the cross-sectional shape of the gasket 14 be narrow in order to achieve advantageous sealing performance. However, the disclosure is not limited thereto.

In order to realize relatively reliable sealing, a plurality of gaskets 14 can be provided in parallel. That is, by providing another gasket 14 on the inner peripheral side or the outer peripheral side of one gasket 14, a multi-sealing structure can be realized. In this case, the injection tab 20 or the exhaust tab 24 may be provided so as to straddle the plurality of gaskets 14. According to this, the rubber-like elastic material can be injected into the cavities 38 of the plurality of gaskets 14 by a common injection gate 40, and a gas can be discharged from the cavities 38 of the plurality of gaskets 14 by a common exhaust hole 56.

The injection groove 42, the injection hole 44, the exhaust groove 52 and the exhaust hole 56 are appropriately set in terms of any of the number thereof formed, specific shape, arrangement with respect to the gasket 14, and size. For example, the filling pressure of the rubber-like elastic material into the cavity 38 can be adjusted by the size or shape of the exhaust groove 52 and the exhaust hole 56. A timing of switching between pressure control by the first orifice 54 and pressure control by the second orifice 58 can be adjusted by the volume of the exhaust groove 52.

The exhaust hole molded part 66 may not be cut off from the exhaust tab 24 when the first split mold 32 and the second split mold 34 are removed. For example, a step of cutting off the exhaust hole molded part 66 from the exhaust tab 24 after demolding may be provided separately from the demolding step. Similarly, separation of the injection hole molded part 64 from the injection tab 20 may be realized by a cutting step after demolding.

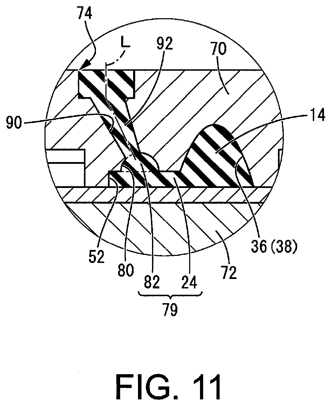

In the aforementioned embodiments, a structure in which the exhaust hole 56 extends in a non-tilting manner with respect to the up-down direction has been described as an example. However, for example, as in an exhaust hole 90 of a fourth embodiment shown in FIG. 11, a central axis L may extend in a tilting manner with respect to the up-down direction. According to this, when the first split mold 70 and the second split mold 72 are removed, an upward pulling force is concentrated on the left side in FIG. 11 in an exhaust hole molded part 92, a crack from the left side in FIG. 11 is likely to occur in the connection portion between the exhaust hole molded part 66 and the connection hole molded part 82, and the exhaust hole molded part 92 can be efficiently cut off. An injection hole may also be tilted with respect to the up-down direction, and an injection hole molded part may be cut off in the same efficient manner as the exhaust hole molded part 92.

### Description of Reference Numerals

- 10: gasket member (first embodiment)

- 12: separator (base material)
- 14: gasket
- 16: upper surface (surface of base material)
- 18: recess
- 20: injection tab
- 22: injection hole removal trace
- 24: exhaust tab (overflow tab)
- 26: exhaust hole removal trace (removal trace)
- 28: sealing target member
- 30: recess
- 32: first split mold
- 34: second split mold
- 36: peripheral groove
- 38: cavity
- 40: injection gate
- 42: injection groove
- 44: injection hole
- 46: injection orifice
- 48: expanded diameter part
- 50: air vent
- 52: exhaust groove
- 54: first orifice
- 56: exhaust hole
- 57: opening
- 58: second orifice
- 60: expanded diameter part
- 62: suction groove
- 64: injection hole molded part
- 66: exhaust hole molded part
- 70: first split mold (second embodiment)
- 72: second split mold
- 74: air vent
- 76: connection hole
- 78: connection hole molded part
- 79: overflow tab
- 80: connection hole (third embodiment)
- 82: connection hole molded part
- 90: exhaust hole (fourth embodiment)
- 92: exhaust hole molded part

## Claims

1. A gasket member manufacturing method for manufacturing a gasket member (10) in which a base material (12) having a plate shape is clamped between a first split mold (32, 70) and a second split mold (34, 72), and a gasket (14) is fixed to a surface (16) of the base material (12) by injecting and filling a rubber-like elastic material into a cavity (38) of the gasket (14) defined between the base material (12) and the first split mold (32, 70), the gasket member manufacturing method comprising:
providing an air vent (50, 74) comprising an exhaust groove (52) and an exhaust hole (56, 90), the exhaust groove (52) being provided extending out from the cavity (38) toward an inner peripheral side or an outer peripheral side on a butting surface between the base material (12) and the first split mold (32, 70) and partially opening in a circumferential direction of the cavity (38), the exhaust hole (56, 90) extending out from the exhaust groove (52) in a clamping direction of the first split mold (32, 70) and the second split mold (34, 72), wherein the exhaust hole (56) has a lower end opening to the exhaust groove (52) and an upper end reaching an upper end of the first split mold (32); and
discharging a gas in the cavity (38) from the exhaust hole (56) to external through the exhaust groove (52) to the outside from the exhaust hole (56) at a time of injection and filling of the rubber-like elastic material into the cavity (38).

2. The gasket member manufacturing method according to claim 1, further comprising:
controlling a filling pressure of the rubber-like elastic material into the cavity (38) by a first orifice (54) composed of the exhaust groove (52) and a second orifice (58) provided at an end of the exhaust hole (56, 90) close to the exhaust groove (52).

3. The gasket member manufacturing method according to claim 1 or 2, wherein
a width dimension of an opening of the exhaust groove (52) toward the cavity (38) is greater than a hole diameter of the exhaust hole (56, 90).

4. The gasket member manufacturing method according to any one of claims 1 to 3, wherein
an opening area of the exhaust hole (56, 90) toward the exhaust groove (52) is smaller than an opening area of the exhaust groove (52) toward the cavity (38).

5. The gasket member manufacturing method according to any one of claims 1 to 4, further comprising:
pulling off and removing a portion of the rubber-like elastic material molded by the exhaust hole (56, 90) from a portion of the rubber-like elastic material molded by the exhaust groove (52) at a time of removal of the first split mold (32, 70) and the second split mold (34, 72).

6. The gasket member manufacturing method according to any one of claims 1 to 5, wherein
the rubber-like elastic material has a Mooney viscosity ML(1+3) at 100 °C of 10 to 80 when injected into the cavity (38).

7. The gasket member manufacturing method according to claim 6, wherein
the rubber-like elastic material being a material for forming the gasket (14) is at least one selected from a group consisting of ethylene-propylene rubber, ethylene-propylene-diene rubber, and ethylene-butene-diene rubber.

8. The gasket member manufacturing method according to any one of claims 1 to 7, wherein
the base material (12) is made of metal.

9. The gasket member manufacturing method according to any one of claims 1 to 8, further comprising:
providing a plurality of each of the air vent (50, 74) and an injection gate (40) for injecting the rubber-like elastic material into the cavity (38), wherein
the air vent (50, 74) and the injection gate (40) are alternately arranged in the circumferential direction of the cavity (38).

10. The gasket member manufacturing method according to any one of claims 1 to 9, wherein the air vent (50, 74) is provided with a connection hole (76, 80) that connects the exhaust groove (52) with the exhaust hole (56, 90), wherein
the connection hole (76, 80) has a connection area toward the exhaust groove (52) greater than a connection area toward the exhaust hole (56, 90).

## Patentansprüche

1. Dichtungselement-Herstellungsverfahren zur Herstellung eines Dichtungselements (10), bei dem ein Basismaterial (12), das eine Plattenform aufweist, zwischen einem ersten geteilten Formwerkzeug (32, 70) und einem zweiten geteilten Formwerkzeug (34, 72) festgeklemmt wird, und eine Dichtung (14) an einer Fläche (16) des Basismaterials (12) befestigt wird, indem ein gummiartiges elastisches Material in einen Hohlraum (38) der Dichtung (14), der zwischen dem Basismaterial (12) und dem ersten geteilten Formwerkzeug (32, 70) definiert ist, eingespritzt und eingefüllt wird, wobei das Dichtungselement-Herstellungsverfahren umfasst:
Bereitstellen einer Entlüftung (50, 74), die eine Auslassnut (52) und ein Auslassloch (56, 90) umfasst, wobei die Auslassnut (52) so bereitgestellt ist, dass sie sich aus dem Hohlraum (38) heraus in Richtung einer Innenumfangsseite oder einer Außenumfangsseite auf einer Anliegefläche zwischen dem Basismaterial (12) und dem ersten geteilten Formwerkzeug (32, 70) erstreckt und teilweise in einer Umfangsrichtung des Hohlraums (38) öffnet, wobei sich das Auslassloch (56, 90) aus der Auslassnut (52) heraus in einer Klemmrichtung des ersten geteilten Formwerkzeugs (32, 70) und des zweiten geteilten Formwerkzeugs (34, 72) erstreckt, wobei das Auslassloch (56) ein unteres Ende aufweist, das zu der Auslassnut (52) hin öffnet, und ein oberes Ende aufweist, das ein oberes Ende des ersten geteilten Formwerkzeugs (32) erreicht; und
Ablassen eines Gases in dem Hohlraum (38) aus dem Auslassloch (56) nach draußen durch die Auslassnut (52) hindurch ins Freie aus dem Auslassloch (56) zum Zeitpunkt des Einspritzens und Einfüllens des gummiartigen elastischen Materials in den Hohlraum (38) .

2. Dichtungselement-Herstellungsverfahren nach Anspruch 1, des Weiteren umfassend:
Steuern eines Fülldrucks des gummiartigen elastischen Materials in den Hohlraum (38) durch eine erste Öffnung (54), die durch die Auslassnut (52) gebildet ist, und eine zweite Öffnung (58), die an einem Ende des Auslasslochs (56, 90) nahe der Auslassnut (52) bereitgestellt ist.

3. Dichtungselement-Herstellungsverfahren nach Anspruch 1 oder 2, wobei
eine Breitenabmessung einer Öffnung der Auslassnut (52) in Richtung des Hohlraums (38) größer ist als ein Lochdurchmesser des Auslasslochs (56, 90).

4. Dichtungselement-Herstellungsverfahren nach einem der Ansprüche 1 bis 3, wobei
eine Öffnungsfläche des Auslasslochs (56, 90) in Richtung der Auslassnut (52) kleiner ist als eine Öffnungsfläche der Auslassnut (52) in Richtung des Hohlraums (38).

5. Dichtungselement-Herstellungsverfahren nach einem der Ansprüche 1 bis 4, des Weiteren umfassend:
Abziehen und Entfernen eines Abschnitts des gummiartigen elastischen Materials, das durch das Auslassloch (56, 90) geformt wurde, von einem Abschnitt des gummiartigen elastischen Materials, das durch die Auslassnut (52) geformt wurde, zu einem Zeitpunkt des Entfernens des ersten geteilten Formwerkzeugs (32, 70) und des zweiten geteilten Formwerkzeugs (34, 72).

6. Dichtungselement-Herstellungsverfahren nach einem der Ansprüche 1 bis 5, wobei das gummiartige elastische Material beim Einspritzen in den Hohlraum (38) eine Mooney-Viskosität ML(1+3) bei 100 °C von 10 bis 80 aufweist.

7. Dichtungselement-Herstellungsverfahren nach Anspruch 6, wobei
das gummiartige elastische Material, das ein Material zum Bilden der Dichtung (14) ist, mindestens eines ist, das ausgewählt ist aus einer Gruppe bestehend aus Ethylen-Propylen-Kautschuk, Ethylen-Propylen-Dien-Kautschuk und Ethylen-Buten-Dien-Kautschuk.

8. Dichtungselement-Herstellungsverfahren nach einem der Ansprüche 1 bis 7, wobei das Basismaterial (12) aus Metall gebildet ist.

9. Dichtungselement-Herstellungsverfahren nach einem der Ansprüche 1 bis 8, des Weiteren umfassend:
Bereitstellen mehrerer von jeweils einer Entlüftung (50, 74) und einem Einspritzkanal (40) zum Einspritzen des gummiartigen elastischen Materials in den Hohlraum (38), wobei
die Entlüftung (50, 74) und der Einspritzkanal (40) in der Umfangsrichtung des Hohlraums (38) abwechselnd angeordnet sind.

10. Dichtungselement-Herstellungsverfahren nach einem der Ansprüche 1 bis 9, wobei die Entlüftung (50, 74) mit einem Verbindungsloch (76, 80) versehen ist, das die Auslassnut (52) mit dem Auslassloch (56, 90) verbindet, wobei
das Verbindungsloch (76, 80) eine Verbindungsfläche in Richtung der Auslassnut (52) aufweist, die größer ist als eine Verbindungsfläche in Richtung des Auslasslochs (56, 90).

## Revendications

1. Procédé de fabrication d'un élément joint d'étanchéité (10) dans lequel un matériau de base (12) en forme de plaque est serré entre un premier moule fendu (32, 70) et un second moule fendu (34, 72), et un joint (14) est fixé à une surface (16) du matériau de base (12) par injection et remplissage avec un matériau élastique de type caoutchouc d'une cavité (38) du joint (14) définie entre le matériau de base (12) et le premier moule fendu (32, 70), le procédé de fabrication de l'élément joint comprenant :
la prévision d'un évent d'aération (50, 74) comprenant une gorge d'échappement (52) et un trou d'échappement (56, 90), la gorge d'échappement (52) s'étendant de la cavité (38) vers un côté périphérique intérieur ou un côté périphérique extérieur sur une surface de butée entre le matériau de base (12) et le premier moule fendu (32, 70) et s'ouvrant partiellement dans une direction circonférentielle de la cavité (38), le trou d'échappement (56, 90) s'étendant depuis la gorge d'échappement (52) dans une direction de serrage du premier moule fendu (32, 70) et du second moule fendu (34, 72), le trou d'échappement (56) ayant une extrémité inférieure s'ouvrant vers la gorge d'échappement (52) et une extrémité supérieure atteignant une extrémité supérieure du premier moule fendu (32) ; et
la décharge d'un gaz dans la cavité (38) depuis le trou d'échappement (56) vers l'extérieur à travers la gorge d'échappement (52) vers l'extérieur depuis le trou d'échappement (56) au moment de l'injection et du remplissage avec du matériau élastique de type caoutchouc de la cavité (38).

2. Procédé de fabrication d'un élément joint selon la revendication 1, comprenant en outre :
la régulation d'une pression de remplissage du matériau élastique de type caoutchouc dans la cavité (38) par un premier orifice (54) composé de la gorge d'échappement (52) et d'un second orifice (58) prévu à une extrémité du trou d'échappement (56, 90) à proximité de la gorge d'échappement (52).

3. Procédé de fabrication d'un élément joint selon la revendication 1 ou 2, dans lequel
une dimension de largeur d'une ouverture de la gorge d'échappement (52) vers la cavité (38) est supérieure à un diamètre de trou du trou d'échappement (56, 90).

4. Procédé de fabrication d'un élément joint selon l'une quelconque des revendications 1 à 3, dans lequel
une zone d'ouverture du trou d'échappement (56, 90) vers la gorge d'échappement (52) est plus petite qu'une zone d'ouverture de la gorge d'échappement (52) vers la cavité (38).

5. Procédé de fabrication d'un élément joint selon l'une quelconque des revendications 1 à 4, comprenant en outre :
l'extraction et le retrait d'une partie du matériau élastique de type caoutchouc moulé par le trou d'échappement (56, 90) d'une partie du matériau élastique de type caoutchouc moulé par la gorge d'échappement (52) au moment du retrait du premier moule fendu (32, 70) et du second moule fendu (34, 72).

6. Procédé de fabrication d'un élément joint selon l'une quelconque des revendications 1 à 5, dans lequel le matériau élastique de type caoutchouc présente une viscosité Mooney ML(1+3) à 100 °C comprise entre 10 et 80 lorsqu'il est injecté dans la cavité (38).

7. Procédé de fabrication d'un élément joint d'étanchéité selon la revendication 6, dans lequel
le matériau élastique de type caoutchouc qui est un matériau pour former le joint d'étanchéité (14) est au moins un matériau choisi dans un groupe constitué par le caoutchouc éthylène-propylène, le caoutchouc éthylène-propylène-diène et le caoutchouc éthylène-butène-diène.

8. Procédé de fabrication d'un élément joint selon l'une quelconque des revendications 1 à 7, dans lequel le matériau de base (12) est constitué de métal.

9. Procédé de fabrication d'un élément joint selon l'une quelconque des revendications 1 à 8, comprenant en outre :
la prévision d'une pluralité de chacun parmi l'évent d'aération (50, 74) et une porte d'injection (40) pour injecter le matériau élastique de type caoutchouc dans la cavité (38),
le trou d'aération (50, 74) et la porte d'injection (40) étant disposés alternativement dans la direction circonférentielle de la cavité (38).

10. Procédé de fabrication d'un élément joint selon l'une quelconque des revendications 1 à 9, dans lequel l'évent d'aération (50, 74) est muni d'un trou de connexion (76, 80) qui connecte la gorge d'échappement (52) au trou d'échappement (56, 90),
le trou de connexion (76, 80) ayant une surface de connexion vers la gorge d'échappement (52) plus grande qu'une surface de connexion vers le trou d'échappement (56, 90).
